# EUROPEAN PATENT APPLICATION

(11) **EP 1 643 725 A1**
(43) Date of publication of application: **05.04.2006**
(21) Application number: 05290380.4
(22) Date of filing: 18.02.2005
(51) Int. Cl.: H04L 29/08, H04L 29/06, H04L 12/58

(54) **Method to manage media resources providing services to be used by an application requesting a particular set of services**

(30) Priority: 30.09.2004 EP 04292349
(71) Applicant: ALCATEL, 75008 Paris (FR)
(72) Inventor: Sienel, Jürgen, 71229 Leonberg (GE); Shen, Yuzhong, 70499 Stuttgart (DE); Drewniok, Marc, 70376 Stuttgart (DE)
(74) Representative: Brose, Gerhard

(57) **Abstract**

A Method is described, to manage a media resource (10, 23, 24) providing a service to be used by an application (30) requesting a particular set of services, comprising the steps of:
- receiving a service request from the application (30) comprising information about the set of services required by said application (30),
- determining at least one media resource (10, 23, 24) by comparing the requested set of services with the services provided by the available media resources (10, 23, 24), and
- providing media resource information comprising at least information about the determined media resource (10, 23, 24) to said application (30).

## Description

### Technical field:

The invention relates to a method to manage a media resource providing a service to be used by an application requesting a particular set of services according to the specifying features of claim 1 plus a telephone network according to the specifying features of claim 8, plus a media resource managing module according to the specifying features of Claim 12, plus a device according to the specifying features of claim 13, plus a computer program product according to the specifying features of claim 16.

### Background of the invention:

The actual development regarding telephone networks is towards speech interaction. Speech interaction can be used to provide improved functionalities within telephone networks, like listening to emails or SMS, to generate and to send emails or SMS by speech, to listen to and to select menu items from a menu by speech and the like. To enable telephone networks to deal with speech interaction, services, such as speech recognition, text to speech generation and the like that are required to provide the desired functionalities have to be integrated into existing telephone networks. This is done by implementing said services into applications providing said functionalities to the subscribers of the telephone network. Thereby one or more services are required to provide one functionality, e.g. text to speech generation and speech recognition is required to listen to a menu and to choose a menu item by speech.

To receive a high user acceptance and a high usability a high quality of speech recognition has to be provided. Thereby it has to be considered, that speech recognition has to deal with user specific articulation, different languages, different vocabulary and the like. To provide a high quality speech interaction, each service providing a certain functionality or a certain part of a functionality has to be adapted to its usage. For example to provide a functionality to choose menu items by speech, speech recognition services are required that only recognize a few key words according to the menu items to be chosen. Such speech recognition services use small grammar files that only allow identifying a small number of different words but provide a high reliability. For example to recognize free speech e.g. to generate an email, a large grammar file is required, wherein the reliability of such a service decreases the larger the grammar file is equivalent to the increasing number of different words that can be recognized. It would be disadvantageous to use a speech recognition service with high reliability but small grammar file to recognize free speech in the same way it would be disadvantageous to use a very complex speech recognition service with a large grammar file only to recognize a small number of words representing menu items.

To solve this problem, different speech recognition services using different sizes of grammar files are implemented into an application. Regarding the different services required to provide the few functionalities described above and regarding applications providing speech interaction in different languages, the problem is obvious, that these applications are very costly due to the large number of different services that are integrated into the application resulting in high hardware requirements. Furthermore the application seldom uses all services at the same time but all services have to be kept in stand-by.

### Technical purpose of the invention:

The technical purpose of the invention is at least to develop a method that allows providing speech interaction functionalities in telephone networks with high reliability at low costs.

### Disclosure of the invention and its advantages:

The invention's technical purpose is met by a method of said specifying features of claim 1, wherein said method to manage a media resource providing a service to be used by an application requesting a particular set of services, e.g. to provide speech interaction functionalities to a subscriber of a telephone network, comprises the steps of:
- receiving a service request from an application comprising information about the set of services required by said application,
- determining at least one media resource by comparing the requested set of services with the services provided by the available media resources,
- providing media resource information comprising at least information about the determined media resource, e.g. access data and the like required to use the determined media resource to said application.

The application provides improved functionalities like speech interaction to the subscribers of a telephone network. Thereby media resources that are independent of the application provide the services required by the application for providing said functionalities. The set of services requested by the application comprises at least one service. The available media resources are all media resources accessible that have available capacity to provide at least one service of the requested set of services to the application. If each media resource is able to only provide one service, the available media resources are the free media resources providing no service to any application in the very moment when the service request is received and the determination of at least one media resource takes place.

Thereby it is thinkable that several media resources belong or are assigned to a media resource handler, wherein the media resources belonging to each media resource handler provide a particular set of services potentially required by at least one application. Several media resource handlers can provide the same set of services. So is thinkable that depending on the requested set of services preferably a set of media resources is determined that belongs or is assigned to one media resource handler that is able to provide all requested services to the application. Doing so, only one media resource handler with its media resources providing the required set of services has to be allocated to one application.

It is also thinkable, that the media resources belonging or assigned to one media resource handler provide numerous identical or similar services to be used simultaneously by different applications. Doing so, several media resources belonging or assigned to different media resource handlers and providing different services are allocated to one application requesting a certain set of services, each service provided by another media resource and each media resource belonging or assigned to another media resource handler.

The services preferably are implemented as net services wherein a connection between the call operator and a server providing said services is established e.g. via the Internet.

Said method according to the invention has the advantage over the state of the art that the complex services are not part of the application but are provided by independent media resources. So the extensive providing of services does not have to be implemented within the applications preferably integrated within a telephone network. Thereby the extensive services can be provided as net services, e.g. as Internet services, and do not require many resources e.g. within the telephone network. Moreover such architecture allows dynamically adding and removing of media resources providing said services. Thereby the possibility to increase or lower the number of media resources providing said services is independent of the telephone network. Doing so, the modernization of media resources and/or the integration of new media resources and/or the removing of old or damaged media resources easily can be accomplished also during operation of the telephone network.

A preferred embodiment of said invention, said method comprises the further step of allocating the determined media resource to said application, at least e.g. during a session started with the service request and being closed when ending the application.

In a preferred embodiment of said invention, the allocation is done by opening a session, preferably reserving the media resource when opening said session and providing the session information to the application.

In another preferred embodiment of said invention, the service request from the application is received by a media resource managing module, wherein the determination of at least one media resource matching at least a part of the service request and the providing of the media resource information to the application and preferably the allocation of the determined media resource is also done by the media managing module. The media resource managing module manages the media resources assigned to the media resource managing module. The media resources can directly be assigned to the media resource managing module or they can be assigned to media resource handlers arranged between the media resource managing module and the media resources. Thereby a set of media resources is assigned to a media resource handler, wherein the media resource handlers are assigned to the media resource managing module.

In another preferred embodiment of said invention, at least one media resource is registered at one media resource handler preferably in a way that they belong to or are assigned to said media resource handler, and wherein at least one media resource handler is assigned to one media resource managing module.

An additional preferred embodiment of said method comprises the further steps of:
- storing information relating to the services provided by the media resources of the assigned media resource handlers in a database,
- providing the information stored in the database to the media resource managing module, and
- using said information by the media resource managing module to determine the media resources to be allocated to the application.

In another additional preferred embodiment of said invention, at least a communication between the media resource managing module and at least one media resource handler takes place and is used for the determination of at least one media resource to be allocated to the application, e.g. to find the most adequate available media resource, said communication comprising e.g. a request if a particular media resource is available.

Generally it is thinkable that the application accesses the determined media resources via the media resource managing module. Thereby the services are guided through the media resource managing module. The connection between the application and the media resources and/or the media resource handlers can directly be established when providing media resource information to the application. From an architectural point of view in this case the media resource managing module is a proxy server, wherein the applications and the media resources and/or the media resource handlers are clients.

In a preferred embodiment of the invention, said method is executed within a telephone network according to the specifying features of claim 9, wherein said telephone network comprises at least means to execute an application providing functionalities to be used by the subscribers of the telephone network, means to provide services to the application and means to determine the most adequate means providing services requested by the application, wherein the means to execute the application are at least temporarily connectable with the means to determine the means providing the requested services and wherein the means to execute the application are at least temporarily connectable with the determined means providing said services.

In a preferred embodiment of said telephone network, the means to execute an application comprise at least one call operator being temporarily connectable with at least one telephone of a subscriber using the telephone network, wherein the means to provide services to the application comprise at least one media resource and the means to determine the most adequate services requested by the application comprise at least one media resource managing module, wherein the call operator is sending the service request to the media resource managing module, the media resource managing module is determining the media resources providing said required services to the application, and the media resource managing module is at least providing the media resource information to the application. It is also thinkable that the media resource managing module provides the media resources to the application in a way that the services are guided through the media resource managing module. Thereby after determining the media resources the application accesses the media resources providing the required services via the media resource managing module.

In another preferred embodiment of said telephone network, several media resources are assigned to, are belonging to or are part of one media resource handler, wherein at least one media resource handler is registered at the media resource managing module.

In an additional preferred embodiment of said telephone network, at least one connection between the call operator, the media resource managing module and the media resources is an Internet connection. Thereby the communication between the call operator and/or the media resource managing module and/or the media resources and/or the media resource handler uses common Internet communication technologies. The data format to exchange information can be e.g. XML.

A preferred embodiment of the invention is a media resource managing module according to the specifying features of claim 13, wherein said media resource managing module comprises at least means to receive a service request from an application requiring at least one service, means to determine a media resource providing at least one requested service and means to provide media resource information to said application.

A preferred embodiment of the invention is a device according to the specifying features of claim 14, wherein said device comprises a call operator being connectable to a telephone network and being able to execute an application featuring functionalities to be used by at least one subscriber of the telephone network, also comprising a media resource managing module according to claim 13 being connectable to said call operator, and furthermore comprising at least one media resource providing at least one service to be used by said application being executed on the call operator, wherein the media resource is connectable to said call operator.

A preferred embodiment of said device comprises at least one media resource handler registered at the media resource managing module, wherein several media resources are assigned to one media resource handler.

In another preferred embodiment of said device at least one connection between the call operator, the media resource managing module and the media resources is an Internet connection.

In another preferred embodiment of the invention, said method is performed by a computer program product stored on a computer usable medium comprising computer readable program means for causing a computer to perform the method mentioned above, when said computer program product is executed on a computer.

### Brief description of the drawing, with

- Figure 1: showing a scheme of an improved telephone network with means to provide enhanced functionalities,
- Figure 2: showing a scheme of the design of a media resource handler,
- Figure 3: showing a scheme of the procedure of a method according to the invention, and
- Figure 4: showing a scheme of the arrangement of the components required to provide enhanced functionalities in an improved telephone network according to the invention.

### Paths for performing the invention:

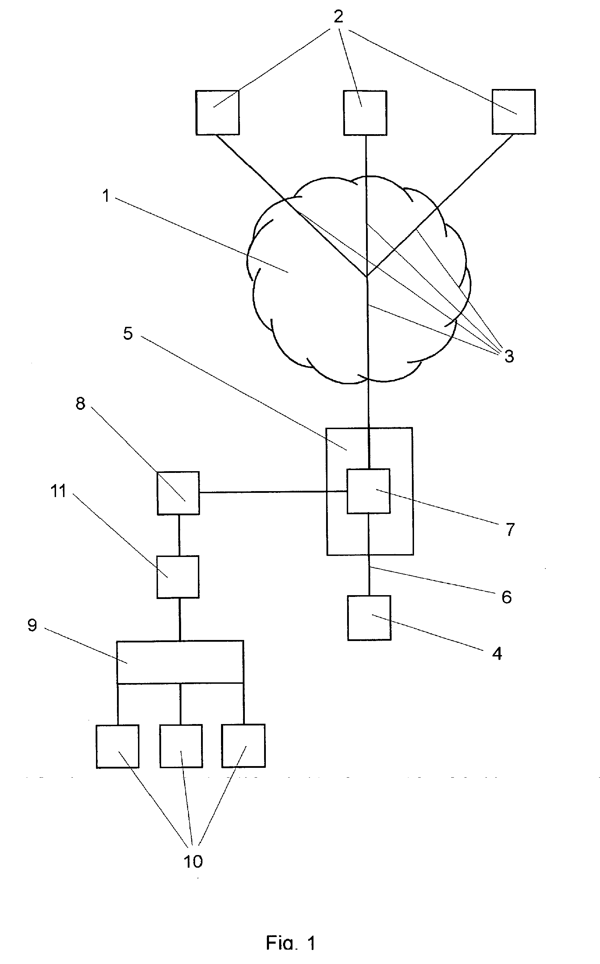

As shown in Fig. 1, an improved telephone network 1 with enhanced functionalities comprises a plurality of subscriber terminals 2 being connected to each other via telephone lines 3. Thereby the telephone line 3 is only symbolic, since it is also thinkable that the subscriber terminals have a wireless connection with each other, e.g. in case of mobile phones. The subscriber terminal 4 features enhanced functionalities provided to callers dialing the telephone number of the subscriber terminal 4. In a gateway 5 a soft switch 7 is arranged that is redirecting an incoming call on the subscriber line 6 to a call operator 8. The redirection can be done after a while or if the subscriber terminal 4 is busy. In the very moment the call operator 8 accepts the call, an application providing different functionalities to the caller starts on the call operator 8. The functionalities provided depend on presetting done by the owner of the subscriber terminal 4. It is thinkable that one subscriber only allows to leave a message or to be called back, wherein another subscriber allows to send a SMS, an email or to forward the call to a mobile. By using the gateway 5 in combination with the soft switch 7, it is very easy to integrate the enhanced functionalities provided by the application running on the call operator 8 into an existing telephone network. The subscriber does not need any new telephone and can keep his old one. Also the modifications of the telephone network 1 are very small.

The application provides functionalities to the caller that allow speech interaction, wherein first of all an artificial voice is telling the caller e.g. that the called is not available at present or that the subscriber terminal is busy. Further the artificial voice is telling the caller menu items he might chose by speech input: being called back, redirecting his call to the mobile number of the called, leaving a message and the like.

For providing this functionality the application needs a text to speech converting service that converts an announcement stored as text in a database into speech. It is also thinkable that the owner of the subscriber terminal 4 has recorded this announcement. In this case, a recording and playback service is required.

The caller now can choose a menu item by speech input. For providing this functionality the application requires a speech recognition service that uses only a small knowledgebase sufficient to recognize the spoken menu items.

By doing so, the caller is guided through one or more menus by a speech based dialogue that allows several different possibilities.

Depending on the menu item chosen by the caller, the application now might require further services.

These further services can also be speech recognition services, e.g. to be used to recognize free speech.

A telephone call might take place in the following way: A first subscriber is trying to call a second subscriber. The second subscriber currently is talking to a third subscriber and therefore is not available. This is the moment the application providing enhanced audio functionalities to the caller is started. It offers several options to the first subscriber by prompting to him: "Hello. This is the voice deputy speaking. Unfortunately the called is not available at the moment but I will try to help you". Short break for experienced users who already know what to do now. If nothing is said, the audio service continues with: "You have the following choices: leave a message by saying 'message', be called back when the called is available again by saying 'callback' or be redirected to the mobile phone of the called by saying 'mobile'. If you want to exit this dialogue, just hang up. For hearing your possible choices again, please say 'repeat"'. The first subscriber decides to talk to the second subscriber when he has released his call and says "callback, please". The audio service returns: "You will get a callback when the subscriber is available again. Bye". After ten minutes, the telephone of the first subscriber is ringing. He accepts the call and is automatically connected to the second subscriber.

In another example, a subscriber needs to receive his emails while he is on a business travel. He calls the audio service, e.g. by dialing his own subscriber terminal. After a speech command, e.g. "mail", the service connects to his email account and tells him: "Hello. You have received eight new emails. Do you want to listen to them now?". The Subscriber knows the dialogue already and asks "Are there any new emails from Jack?" and the system prompts to him: "Yes, there is one new email from Jack. Do you want to listen to it?". The subscriber answers "Yes, please". Then the service is reading the text of said email to the subscriber. After the reading, a further dialogue starts with "What do you want to do now?". The subscriber says: "Answer to last email" and gets the response: "Send email to Jack. Please start dictating now". The subscriber starts dictating a new email. When finished the email the subscriber may listen to his other new emails and then ends the speech dialogue with the call operator.

A basic requirement for dialogues like above is a text to speech generation service and speech recognition service. Text to speech generation is the transformation of written text into computer-generated audio data that can be played by a computer speaker. Speech recognition is the ability to understand spoken words. By combining these two techniques, a speech-controlled dialogue can be created.

A speech recognition service is very complex software since every human being speaks in a slightly different way. Variations can be found in the pronunciation of words, in producing expressions employing different words, in the velocity of speaking, the sound volume and especially, in different dialects. A speech recognition service attempts to interpret recorded audio data and convert it into a literal text corresponding to the speech. For doing so an enormous amount of processes have to be performed for high quality recognition results.

Most of the time, speech recognition is used in a certain context. E.g. in a speech-based dialogue the speech recognition only needs to find out which menu item was spoken. That means there are only few options available and that the speech recognition application may consider only these options. Due to this, every speech recognition service includes a grammar file included in a knowledge base that informs the application about the words that can be recognized. The quality of the recognition result directly depends on the grammar. If there are only five different words that do not sound very similar, e.g. in a menu comprising five menu items, the probability of a correct interpretation is much greater than within a grammar that allows a few hundred or a few thousand different keywords. In conclusion, the most challenging grammar for a speech recognition application is a free grammar, which attempts to recognize whatever is said.

Furthermore a speech recognition service may be able to work on different languages. For doing so the speech recognition service has to use different basic language information. For example, the pronunciation of German speech is fundamentally different from English speech.

For such different functionalities there are different speech recognition services provided to the application, which differ in the size and content of their grammar files.

There are additional functionalities thinkable provided by other services, e.g. like playing an audio file or recording a message. Having such options, a telephone network with enhanced functionalities as described is able to handle a high number of calls when a dialed subscriber terminal is busy, turned off and the like.

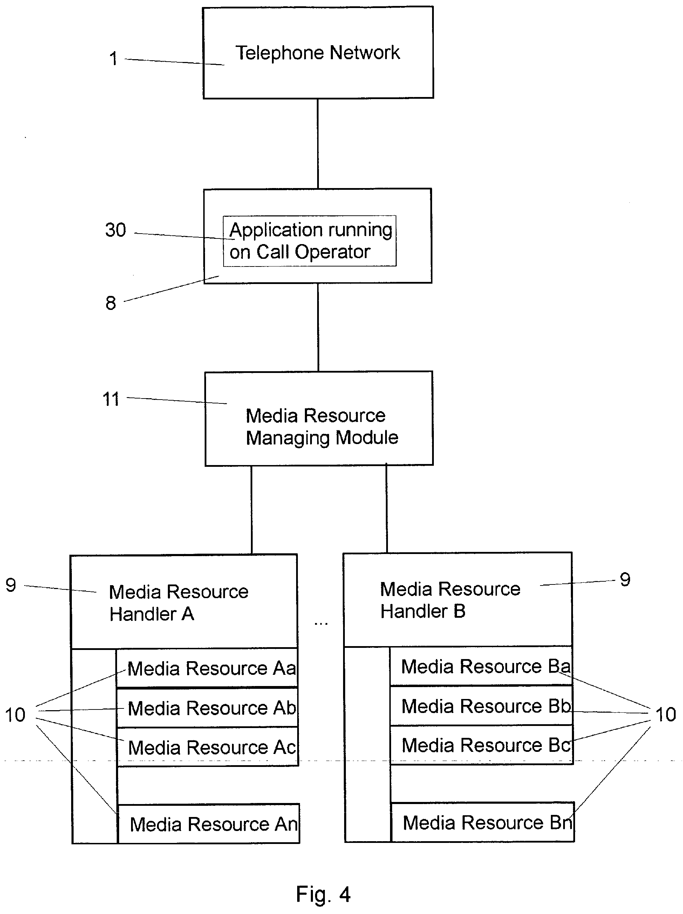

It would be too costly to fit the application providing the functionalities to the user with all services ever required. Due to this, the core of the invention is to provide the services to the application on demand, e.g. as web services provided by independent media resources 10 (Fig. 4).

As shown in Fig. 1 speech based functionalities are provided by an application running on the call operator 8. This call operator 8, e.g. implemented as a server, is responsible for the speech dialog with the telephone subscriber. Speech recognition and speech generation services are included in a media resource handler 9. The soft switch 7 allows an interaction between the different telephone subscribers and the call operator 8. The media resource handler 9 provides the substantial speech processing services to the application running on the call operator 8. Thereby the media resource handler 9 offers certain services to the application like e.g. a certain speech recognition service and a certain text to speech generation service fulfilling the specific requirements of the application to provide a certain functionality or a certain set of functionalities within a certain session. Depending on the functionalities to be provided by the application, the application requires a certain set of services to be used to generate said functionalities. Different services are characterized e.g. by different languages, different sizes of the grammar file of the speech recognition and the like.

An important part of the invention concerns the media resource handler 9 that manages a plurality of media resources 10 assigned to or belonging to the media resource handler 9. The media resource handler 9 preferably runs as a web _ _ service.

The media resource handler 9 manages and administrates its media resources 10 in a flexible and dynamic way and reserves the available media resources 10 only in the event of use. This will help to reduce the cost factor of the audio services. Another advantage is the simplification of the audio service functionality for the call operator 8, as it can use some defined commands and does not have to be involved in the complex initialization processes of the software generating said services. Moreover, the media resource handler will be able to manage many different software resources. As a result the call operator 8 gets an all in one solution for all of his audio services that provides him a uniform and easy to handle interface.

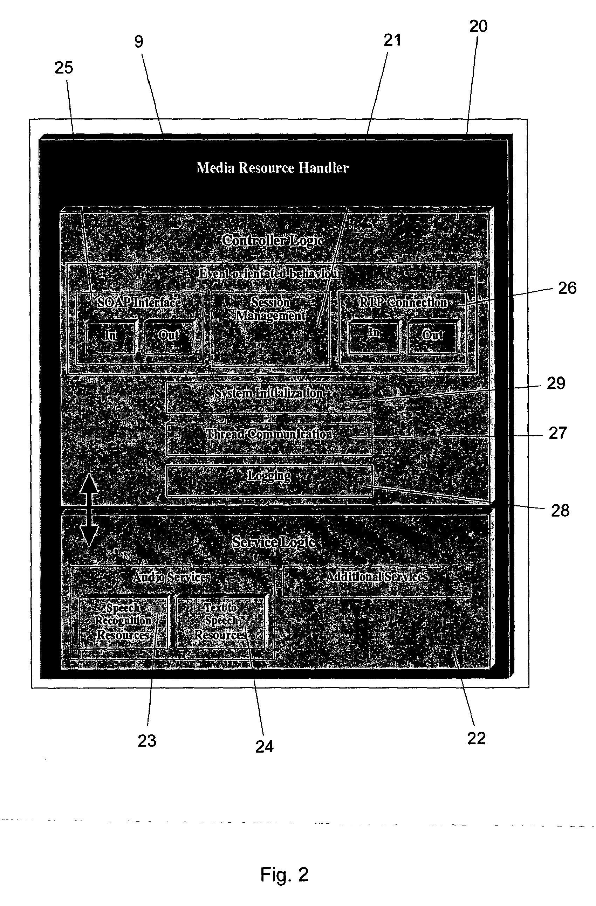

Fig. 2 shows a scheme of the architecture of the media resource handler 9. The controller logic 20 includes the administration of all session information-based actions within the session management 21. The session management 21 is responsible for the correct management of several sessions in parallel and the correct usage of the available services. Within the controller logic 21, the complete event orientation like e.g. RTP connection 26, thread communication 27, logging 28 and system initialization 29 can be found. There are special mechanisms for asynchronous calls like e.g. a SOAP interface 25. The speech recognition media resources 23 and text to speech media resources 24 are embedded in the service logic 22.

Since the media resource handler is designed to provide a plurality of audio services at the same time, it needs to manage these audio services in different sessions. The ability to work in an event-orientated way preferably is realized with threads. All threads need to contain information about their session, e.g. the address of the call operator on which the application runs on or the rtp port to which the result data will be sent. The session ID and further session related values are stored within the session management 21 of the media resource handler 20 and can be accessed as long as this session exists (Fig. 2).

The media resource handler preferably is designed as a muiti-user web service. It can manage several sessions in parallel while sending and receiving data in realtime. Because some services may take a longer time, the media resource handler is preferably designed to be able to handle with multiple threads. A thread is always part of a process and can access the memory that belongs to this process. It starts at a user-defined time and stops either when it is terminated by the process or when it comes to an end.

Due to the fact that multiple users can send requests to the media resource handler, it has to work on each request in a separate thread. That limits the number of parallel users only by the power of the server on which the media resource management module is implemented.

Moreover, some services, for example speech recognition, need an incorporated thread system to work correctly. When the user invokes a service for speech recognition, he needs to know when he can start sending audio data which will be recognized. That means that his SOAP call must return a message, which tells him 'received your call, prepared all for recognition and now wait for your audio data'. Then he can start sending it via rtp. The media resource handler must be able to receive the data, recognize it and send back the result to the correct client. For this purpose, several threads are necessary.

The media resource handler preferably features a SOAP interface. This interface allows working on each available command in a single thread. That makes it possible to accept time-overlapping calls.

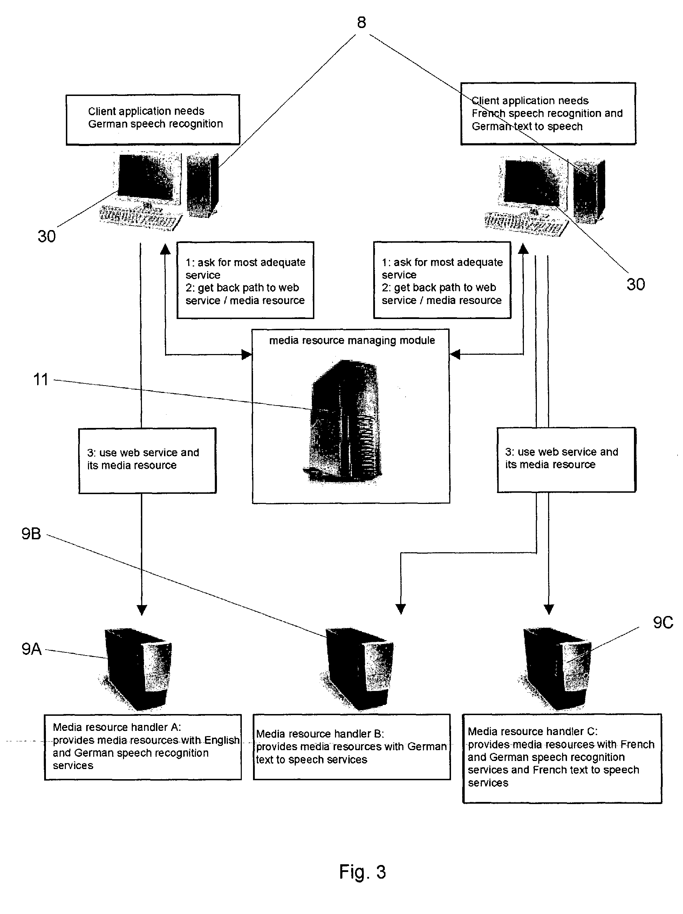

Fig. 3 shows three media resource handlers 9A, 9B, 9C running in parallel as web services. Each media resource handler 9 provides media resources with different services. The media resource handler 9A provides different media resources with speech recognizing services in English and different media resources with speech recognizing services in German. The differences within the English or German speech recognition services may be e.g. the size of the grammar file. The media resource handler 9B provides media resources with text to speech generation services in German, wherein the differences within the text to speech generation services may be e.g. that one service provides a female voice and the other a male voice. The media resource handler 9C provides different media resources with French and German speech recognizing services and media resources with text to speech generation services in French.

Submitting a service request to the media resource managing module 11, the application 30 running on the call operator 8 declares its requirements for the services within a service request. That means e.g. the size of the vocabulary that is needed for speech recognition: digits only for receiving a credit card number, a small vocabulary to navigate through a predefined dialog or free speech dictation that recognizes whatever the user says. Moreover parameters like the demanded languages have to be declared. The complete list of available parameters is defined later on in the design and implementation portion of the media resource managing module.

Having this information, the media resource managing module 11 determines the media resource handler that currently possesses the best-fitting media resource for this client application 30. For this determination the media resource managing module 11 has on overview over all resources provided by the media resource handlers 9A, 9B, 9C. By this procedure the client application 30 does not have to ask each media resource handler 9A, 9B, 9C to find a free and adequate service. Instead of this, it receives the path to the best matching media resource handler within a description file or a list of the best matches from the media resource managing module 11, wherein the description file or the list is comprised in the media resource information.

If the client application 30 requires a German speech recognition service two possible options exist. Both media resource handlers 9A and 9C provide such a service.

But these media resources do not necessarily fit the client application in the same scale. For this reason the media resource managing module 11 features a special search algorithm that takes several media resource attributes into consideration.

In order to be able to compare the requirements of a client application to the available media resources provided by a web service, a defined description is necessary. This description is included in the service request the application 30 is sending to the media resource managing module 11.

This description includes the name of the web service, the resource types it offers, the amount of the resources and the path to the associated web service description file. By doing so, the most appropriate media resource providing the best fitting service will be determined and provided to the application 30.

Fig. 4 shows a scheme of the arrangement of the components required to provide enhanced functionalities in an improved telephone network 1. The telephone network 1 is connected with a call operator 8 on which an application 30 providing enhanced functionalities to the telephone network 1 runs. The connection to the telephone network is realized with a soft switch 7 arranged in a gateway 5 (Fig. 1 ).

The call operator 8 is connected with the media resource managing module 11. The media resource managing module 11 is preferably implemented as a web service. One media resource managing module 11 administrates several media resource handlers 9 and provides an interface to the application 30 running on the call operator 8. Each media resource handler 9 provides a plurality of media resources 10 to be used on demand by the application 30 running on the call operator 8.

If a telephone subscriber calling someone else, but the dialed person is currently not available the caller is automatically redirected to the call operator 8. For starting a dialogue with the caller, the client application 30 running on the call operator 8 needs to be provided with particular services. The client application 30 starts a query to the media resource managing module 11 by passing a description of the required media resource to it. The media resource managing module 11 compares the requirements to all media resources in its database and finally returns the path to the best fitting resource to the client. Possessing this path, the client application 30 can use web services e.g. to perform speech recognition and text to speech generation.

The client application 30 asks for a certain service provided by a particular media resource 10 by sending a service request to the media resource managing module 11. It is also thinkable that the client application 30 asks for a set of services provided by a set of media resources 10. The service request describes e.g. a text to speech resource with two German voices, one female and one male, that supports formatable input strings and costs a maximum of 0.05 € per second. The client application 30 sends this inquiry to the media resource managing module 11.

The determination of the media resources 10 required by the application 30 and the allocation of the media resources 10 to the application 30 is done by the media resource managing module 11, e.g. implemented in the call operator 8 (Fig. 1).

By comparing the service request with the services provided by the media resources 10 of the media resource handlers 9 connected with the media resource managing module 11, the media resource managing module 11 determines the most appropriate media resources 10 matching the service request. The media resource managing module 11 provides the application 30 with a media resource information comprising a result file with e.g. a WSDL path to said media resources 10. The client application 30 parses the result file and connects to the media resources 10 providing the required services.

The client application 30 is now able to use the services provided by the media resources 10 by referring to the WSDL path.

### Commercial applicability:

The invention is commercially applicable particularly in the field of production and operation of telephone networks and devices to be used to provide enhanced services within telephone networks.

### List of reference numerals

- 1: telephone network
- 2: subscriber terminal
- 3: telephone line
- 4: subscriber terminal
- 5: gateway
- 6: subscriber line
- 7: soft switch
- 8: call operator
- 9: media resource handler
- 10: media resource
- 11: media resource managing module

- 20: controller logic
- 21: session management
- 22: service logic
- 23: media resource providing speech recognition service
- 24: media resource providing text to speech generation service
- 25: SOAP interface
- 26: RTP connection
- 27: Thread communication
- 28: Logging
- 29: System initialization
- 30: application

## Claims

1. Method to manage a media resource (10, 23, 24) providing a service to be used by an application (30) requesting a particular set of services, comprising the steps of:
- receiving a service request from the application (30) comprising information about the set of services required by said application (30),
- determining at least one media resource (10, 23, 24) by comparing the requested set of services with the services provided by the available media resources (10, 23, 24), and
- providing media resource information comprising at least information about the determined media resource (10, 23, 24) to said application (30).

2. Method according to claim 1, comprising the further step of:
- allocating the determined media resource (10, 23, 24) to said application (30).

3. Method according to claim 2,
**characterized in**
**that** the allocation is done by opening a session and providing the session information to the application (30).

4. Method according to claim 1, 2 or 3,
**characterized in**
**that** the service request is received by a media resource managing module (11) wherein the determination of at least one media resource (10, 23, 24) and the providing of the media resource information is also done by the media managing module (11).

5. Method according to claim 4,
**characterized in**
**that** at least one media resource (10, 23, 24) is registered at one media resource handler (9), and wherein at least one media resource handler (9) is assigned to one media resource managing module (11 ).

6. Method according to claim 5, comprising the further steps of:
- storing information relating to the services provided by the media resources (10, 23, 24) of the assigned media resource handlers (9) in a database,
- providing the information stored in the database to the media resource managing module (11), and
- using said information to determine the media resources (10, 23, 24) to be allocated to the application (30).

7. Method according to claim 5 or 6,
**characterized in**
**that** at least a communication between the media resource managing module (11) and at least one media resource handler (9) is used for the determination of at least one media resource (10, 23, 24) to be allocated to the application (30).

8. Method according to one of the claims 4 to 7,
**characterized in that** the application accesses the determined media resources via the media resource managing module.

9. Telephone network to be used to execute the method according to one of the claims 1 to 8,
**characterized in**
**that** the telephone network (1) comprises at least means (8) to execute an application (30) providing functionalities to be used by the subscribers of the telephone network (1), means (9, 10) to provide services to the application (30) and means (11) to determine the most adequate means (9, 10) providing services requested by the application (30), wherein the means (8) to execute the application (30) are at least temporarily connectable with the means (11) to determine the means (9, 10) providing the requested services and wherein the means (8) to execute the application (30) are at least temporarily connectable with the determined means (9, 10) providing said services.

10. Telephone network according to claim 9,
**characterized in**
**that** the means to execute an application (30) comprise at least one call operator (8) being temporarily connectable with at least one telephone (2, 4) of a subscriber using said telephone network (1), wherein the means to provide services to the application (30) comprise at least one media resource (10, 23, 24) and the means to determine the most adequate services requested by the application (30) comprise at least one media resource managing module (11), wherein the call operator (8) is sending the service request to the media resource managing module (11), the media resource managing module (11) is determining the media resources (10, 23, 24) providing said required services to the application (30), and the media resource managing module (11) is at least providing the media resource information to the application (30).

11. Telephone network according to claim 10,
**characterized in**
**that** several media resources (10, 23, 24) are assigned to one media resource handler (9), wherein at least one media resource handler (9) is registered at the media resource managing module (11).

12. Telephone network according to one of the claims 9, 10 or 11,
**characterized in that** at least one connection between the call operator (8), the media resource managing module (11) and the media resources (10, 23, 24) is an Internet connection.

13. Media resource managing module to be used to perform the method of anyone of the claims 1 to 8, comprising at least means to receive a service request from an application (30) requiring at least one service, means to determine a media resource (10, 23, 24) providing at least one requested service and means to provide media resource information to said application (30).

14. Device to be used to execute the method of anyone of the claims 1 to 8 comprising a call operator (8) being connectable to a telephone network (1) and being able to execute an application (30) featuring functionalities to be used by at least one subscriber of the telephone network (1), also comprising a media resource managing module (11) according to claim 13 being connectable to said call operator (8), and furthermore comprising at least one media resource (10, 23, 24) providing at least one service to be used by said application (30), wherein the media resource(10, 23, 24) is connectable to said call operator (8).

15. Device according to claim 14 comprising at least one media resource handler (9) registered at the media resource managing module (11), wherein several media resources (10, 23, 24) are assigned to one media resource handler (9).

16. Device according to one of the claims 13, 14 or 15,
**characterized in that** at least one connection between the call operator (8), the media resource managing module (11) and the media resources (10, 23, 24) is an Internet connection.

17. Computer program product stored on a computer usable medium comprising computer readable program means for causing a computer to perform the method of anyone of the claims 1 to 8, when said computer program product is executed on a computer.
